Europäisches Patentamt

European Patent Office

Office européen des brevets

(11) Numéro de publication: **0 398 788**
**A1**

## (12) DEMANDE DE BREVET EUROPEEN

(21) Numéro de dépôt: 90401243.2

(22) Date de dépôt: 10.05.90

(51) Int. Cl.5: **C01B 21/098, C01B 21/097, B01J 19/20**

(30) Priorité: 19.05.89 FR 8906565

(43) Date de publication de la demande:
**22.11.90 Bulletin 90/47**

(84) Etats contractants désignés:
**AT BE CH DE DK ES FR GB GR IT LI LU NL SE**

(71) Demandeur: **ATOCHEM**
**4 & 8, Cours Michelet La Défense 10**
**F-92800 Puteaux(FR)**

(72) Inventeur: **Bertrand, Joel**
**8 Allée des Tilleuls**
**F-31320 Castanet(FR)**
Inventeur: **Potin, Philippe**
**9 Rue des Pâquerettes**
**F-64140 Billere(FR)**

(74) Mandataire: **Rochet, Michel et al**
**ATOCHEM Département Propriété**
**Industrielle La Défense 10 Cédex 42**
**F-92091 Paris La Défense(FR)**

(54) **Procédé de polycondensation en masse du N-dichlorophosphoryl- ou N-dichlorothiophosphoryl-P-trichlorophosphazène.**

(57) L'invention concerne un procédé de polycondensation en masse de N-dichlorophosphoryl- ou de N-dichlorothiophosphoryl-P-trichlorophosphazène.

Ce procédé consiste à effectuer la polycondensation, sous agitation, dans un réacteur muni d'un système empêchant l'accumulation de polycondensat sur l'agitateur.

On peut ainsi obtenir des polycondensats de très haute masse moléculaire sans réticulation.

FIG. 1

EP 0 398 788 A1

## PROCEDE DE POLYCONDENSATION EN MASSE DU N-DICHLOROPHOSPHORYL- OU N-DICHLOROTHIOPHOSPHORYL-P-TRICHLOROPHOSPHAZENE

L'invention se rapporte à un procédé de préparation de polychlorophosphazènes linéaires possèdant un groupement terminal -PXCl$_2$, X désignant un atome d'oxygène ou de soufre, par polycondensation de N-dichlorophosphoryl- ou de N-dichlorothiophosphoryl-P-trichlorophsophazene (P$_2$NXCl$_5$).

On sait qu'en chauffant les composés de formule P$_2$NXCl$_5$ dans des conditions de pression et de température propres à libérer PXCl$_3$, on forme des polychlorophosphazènes linéaires possèdant un groupement terminal -PXCl$_2$. Ainsi dans le brevet français n° 79 24037 (publication n° 2466435) on décrit la préparation de polychlorophosphazènes linéaires présentant un groupement terminal dichlorophosphoryle de formule -POCl$_2$, en polycondensant le composé P-trichloro N-dichlorophosphoryl monophosphazène de formule brute P$_2$NOCl$_5$, par chauffage dans les conditions de pression et de température choisies pour libérer POCl$_3$, tandis que dans la demande de brevet français n° 83 11264 (publication n° 2548652), on décrit la préparation de polychlorophosphazènes linéaires présentant un groupement terminal dichlorothio-phosphoryle de formule -PSCl$_2$, en polycondensant le composé P-trichloro N-dichlorothiophosphoryle monophosphazène de formule brute P$_2$NSCl$_5$, par chauffage dans des conditions de pression et de température appropriées pour libérer PSCl$_3$.

Ces polychlorophosphazènes linéaires à groupement terminal -PXCl$_2$ répondent à la formule brute suivante :

Cl$_2$(X)P$\{$NPCl$_2$ $\}_n$Cl    (I)

dans laquelle n est un nombre égal ou supérieur à 4, la valeur maximum de n pouvant atteindre 5000 voire davantage.

Malgré des avantages indéniables, parmi lesquels on peut signaler tout particulièrement la simplicité de la mise en oeuvre, le taux élevé de conversion du monomère et le coût relativement faible dudit monomère, le procédé précité de pré paration de polychlorophosphazènes linéaires à groupement terminal -PXCl$_2$ par polycondensation du monomère P$_2$NXCl$_5$ par chauffage n'est pas entièrement satisfaisant car il ne permet pas facilement d'obtenir des degrés de polycondensation élevés de manière reproductible.

En effet, lorsque le dégagement de PXCl$_3$ cesse, le degré de polycondensation moyen des polychlorophosphazènes linéaires formés est faible, à savoir que n est de l'ordre de 20 à 30, ce qui signifie que lesdits polychlorophosphazènes sont des produits à chaînes courtes. Pour obtenir un polycondensat ayant un degré de polycondensation plus élevé, ces produits à chaînes courtes doivent réagir entre eux par leurs extrémités pour former des produits à chaînes longues, ce qui nécessite une poursuite de la polycondensation après la fin de dégagement du composé PXCl$_3$. Le cours de cette deuxième phase de la polycondensation est difficile à contrôler et l'obtention de polychlorophosphazènes non réticulés ayant des degrés de polycondensation supérieurs à environ 500 reste aléatoire. En effet, le risque de réticulation augmente avec l'accroissement de la longueur des chaînes polymères et ce phénomène se développe d'une façon variable d'un essai à l'autre. Il en résulte donc une reproductibilité médiocre lorsque l'on cherche à atteindre des degrés de polycondensation élevés. Ceci constitue un handicap sérieux pour une mise en oeuvre industrielle du procédé en masse car la plupart des applications des polychlorophosphazènes linéaires font appel à des produits ayant des degrés de polycondensation élevés.

De plus, cette technique de polycondensation est généralement mise en oeuvre dans un réacteur agité de type courant, consistant en une cuve chauffée par la paroi et une agitation à ancre. Avec cet équipement, la polycondensation effectuée en masse doit être arrêtée à un niveau de masse moléculaire limité au maximum aux environs de 100000, au risque de réticulation et d'obtention d'un polymère insoluble et inutilisable.

Dans le brevet français n° 84 15892 (publication n° 2571710), il a été proposé d'effectuer la polycondensation, soit totalement, soit pendant sa phase finale, en solution. Cette amélioration confère au polycondensat une grande résistance vis à vis des phénomènes de réticulation et permet d'obtenir un polydichlorophosphazène linéaire. de niveau de masse moléculaire élevé.

Ce procédé présente cependant un certain nombre d'inconvénients liés à l'utilisation de solvants. En effet, ceux-ci doivent être d'une grande pureté et soigneusement déshydratés. Avec les températures très élevées auxquelles la polycondensation est effectuée, la présence de solvant oblige à opérer sous pression. La conjonction des températures élevées, de la pression et d'un milieu très corrosif, pose des problèmes matériels difficiles à résoudre. Le fait d'opérer en solution entraîne un surcoût du réacteur qui doit être de taille plus importante et qui doit résister à la pression. Enfin, le solvant doit être séparé du polymère et purifié pour être recyclé.

L'invention propose en premier lieu un procédé de préparation de polychlorophosphazène de masse

EP 0 398 788 A1

moléculaire pouvant atteindre des valeurs très élevées, par exemple supérieure à 500000.

L'invention propose également un procédé permettant d'atteindre des niveaux élevés de polycondensation sans réticulation du polycondensat.

L'invention propose encore une technique de préparation conduisant à une bonne distribution de la masse moléculaire du polychlorophosphazène et à un polymère homogène parfaitement soluble dans les solvants usuels du polychlorophosphazène, par exemple dans le tétrahydrofuranne.

D'autres objets et avantages du procédé de l'invention apparaîtront à la lecture de ce qui suit.

L'invention a donc pour objet un procédé de préparation en masse de polychlorophosphazènes à partir de $P_2NXCl_5$, où X désigne un atome d'oxygène ou de soufre, ce procédé étant caractérisé en ce qu'au moins la phase de polycondensation postérieure à la cessation du dégagement de $PXCl_3$ (phase finale) est effectuée dans un réacteur cylindrique sensiblement vertical comportant dans la zone de polycondensation un système d'agitation et des pièces fixes ou mobiles s'opposant à l'accumulation du polycondensat sur ledit système d'agitation.

Plus précisément, l'invention a pour objet un procédé selon lequel la phase finale de la polycondensation est réalisée dans un réacteur cylindrique sensiblement vertical, comportant :

A/ au moins un agitateur comportant un ruban hélicoïdal, l'axe de rotation dudit ou desdits agitateur-(s) étant sensiblement parallèle(s) à la génératrice du cylindre constituant le réacteur, la géométrie dudit ruban hélicoïdal et son sens de rotation provoquant un mouvement essentiellement descendant du polycondensat en formation dans la partie du réacteur constituée par un ou plusieurs cylindres de révolution dont l'axe ou les axes est (sont) constitué(s) par l'axe ou les axes de rotation du ou des agitateur-(s) et

B/ une ou plusieurs pièces mobiles, solidaires ou non du ou des agitateurs mentionnés sous A et/ou une ou plusieurs pièces immobiles, solidaires du réacteur, destinées à conférer au polycondensat un mouvement essentiellement ascendant dans la partie restante du réacteur, le volume représenté par le cylindre ou l'ensemble des cylindres de révolution susmentionnés représentant sensiblement la moitié du volume du réacteur effectivement occupé par le polycondensat.

L'invention concerne tout particulièrement un procédé de préparation polychlorophosphazènes par polycondensation de $P_2NXCl_5$, ce procédé étant conduit dans un réacteur vertical cylindrique comportant un agitateur (AV) vertical dont l'axe de rotation se confond avec l'axe du réacteur cylindrique précité, ledit agitateur (AV) étant constitué d'un arbre et d'un ruban hélicoïdal enroulé sur cet arbre, le sens d'enroulement du ruban étant fixé par rapport au sens de rotation dudit agitateur (AV) aux fins de provoquer un déplacement de la matière essentiellement du haut vers le bas à proximité dudit agitateur, ledit réacteur comportant un second système d'agitation créant un mouvement essentiellement ascendant à proximité de la paroi du réacteur.

Le second système d'agitation peut être solidaire ou non de l'agitateur (AV). A titre d'illustration de systèmes solidaires, on peut mentionner les rubans hélicoïdaux fixés sur le même arbre que l'agitateur AV à une certaine distance dudit arbre, le sens d'enroulement desdits rubans étant inverse par rapport à celui du ruban de l'agitateur AV. On peut également mentionner les agitateurs ancre, solidaires de l'arbre de l'agitateur AV, les pales de ladite ancre étant de préférence inclinées de part et d'autre du plan de symétrie du réacteur, selon un angle pouvant être compris par exemple entre 10 et 30°.

Lorsqu'on utilise un système complexe à double ruban hélicoïdal, tel que mentionné plus haut, lesdits rubans présentent avantageusement une largeur de lame représentant de 10 à 40 % du rayon interne du réacteur, le ruban intérieur (constituant l'agitateur AV) étant de préférence directement fixé sur l'arbre de l'agitateur, le bord intérieur du ruban extérieur (servant à créer le mouvement vertical ascendant) étant solidarisé de place en place avec l'arbre de l'agitateur. à une distance avantageusement comprise entre environ 40 et environ 60 % du rayon interne du réacteur (distance comptée à partir de l'axe de l'arbre d'agitation). Dans un tel système à double ruban hélicoïdal, le pas des enroulements hélicoïdaux est généralement compris entre 10 et 100 % de la hauteur effective du réacteur (1 à 10 spires).

Lorsqu'on utilise un système comprenant un agitateur AV ayant un ruban hélicoïdal et un système type agitateur-ancre, la largeur du ruban peut avantageusement représenter 10 à 60 % et de préférence 15 à 50 % du rayon interne du réacteur, les pales de l'agitateur-ancre, de préférence inclinées comme indiqué ci-avant, épousant sensiblement la forme du fond du réacteur et remontant le long de la paroi cylindrique sur une hauteur pouvant aller d'environ 30 à environ 70 % de la hauteur effective du réacteur.

L'expression "hauteur effective du réacteur" utilisée dans le présent document désigne la hauteur de la partie du réacteur occupée par le polycondensat en formation et ou formé.

Selon une variante, le second système d'agitation peut être non solidaire de l'agitateur (AV). La contre-agitation, c'est-à-dire dirigée du bas vers le haut, peut être obtenue par l'utilisation de pièces fixes, solidaires de la paroi du réacteur lui-même, qu'il s'agisse de la paroi latérale, c'est-à-dire cylindrique, ou

3

des extrémités dudit cylindre, ou des pièces mobiles, telles que, par exemple, un agitateur-ancre du type mentionné précédemment mais monté sur un arbre différent de celui de l'agitateur AV.

Les figures 1 à 3, données à titre purement illustratif, représentent des systèmes utilisables conformément au procédé conforme à l'invention.

La figure 1 illustre un système comportant deux rubans hélicoïdaux solidaires du même arbre. La rotation de cet arbre entraînera par le ruban interne la masse réactionnelle dans un mouvement vertical descendant, ladite masse étant reprise par le ruban externe dans un mouvement vertical essentiellement ascendant.

Dans la figure 2, le ruban hélicoïdal externe est remplacé par un agitateur-ancre.

Sur la figure 3, on illustre les positions respectives préférentielles des pales de l'agitateur-ancre, c'est-à-dire que ces pales forment un angle de part et d'autre du plan de symétrie passant par l'axe de rotation de l'agitateur constitué par le ruban hélicoïdal.

Il va sans dire qu'on ne sortirait pas du cadre de l'invention en utilisant d'autres systèmes d'agitation susceptibles de conférer à la masse du polychlorophosphazène en formation les déplacements permettant d'empêcher l'accumulation du polychlorophosphazène sur le système d'agitation.

Le procédé conforme à l'invention peut être utilisé pour la préparation de polychlorophosphazène en suivant les techniques rappelées ci-avant, et qui sont décrites par exemple dans les brevets français 2 466 435 et 2 548 652 mentionnés plus haut et dont le contenu est incorporé par référence. Les polychlorophosphazènes peuvent eux-mêmes être ensuite substitués, notamment par des groupements phénoxy ou fluoroalkoxy, par exemple en suivant la technique décrite dans les brevets américains 3 515 688, 4 514 550, 3 970 553, 4 576 806 ou dans la demande de brevet français n° 87 14215.

Les exemples suivants illustrent l'invention.

## EXEMPLE 1

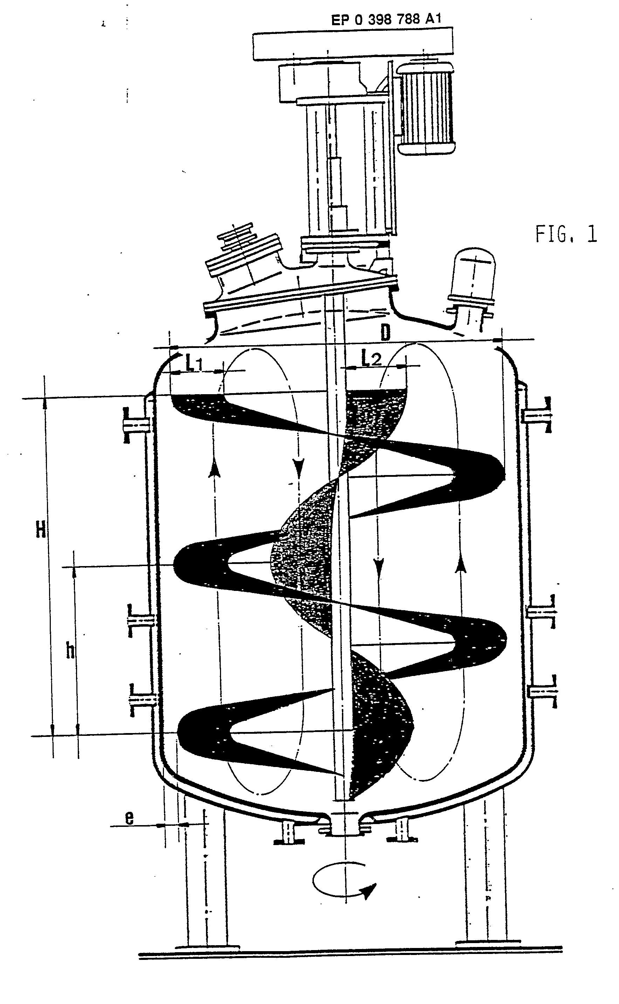

On utilise un réacteur muni d'un double ruban hélicoïdal, tel que représenté sur la figure 1. Les symboles représentés sur cette figure ont les valeurs suivantes (en mm) :

$D = 290$

$H = 180$

$h = 90$

$L_1 = 43,5$

$L_2 = 54$

$e = 5$

On introduit dans ce réacteur 20 Kg (74,2 moles) de dichlorophosphoryltrichlorophosphazène $(P_2NOCl_5)$. On chauffe à 280° C sous atmosphère d'azote, l'agitateur tournant à 30 t/mn.

Le dégagement d'oxychlorure de phosphore correspondant à 95 % de la quantité théorique, soit 8,5 Kg, cesse après 4,42 heures de réaction. La polycondensation est continuée et suivie en fonction du temps par des mesures de viscosité intrinsèque. On observe l'évolution suivante :

| Temps (h) | $[\eta]$ THF 30° (ml/g) |
|---|---|
| 12,8 | 28,8 |
| 19,3 | 36,9 |
| 26,3 | 56,2 |

Le réacteur est refroidi à 100°. On introduit 10 l de toluène. Après 4 h d'agitation, on obtient une solution de polydichlorophosphazène exempte de fraction insoluble.

100 g de cette solution (0,859 équivalent chlore) sont dilués dans 400 ml de toluène et versés dans une solution contenant 109,6 g de phénate de sodium (0,945 mole) dans 1 l de diéthylène glycol diméthyl éther. L'ensemble est mis à réagir sous gaz inerte, à 120° pendant 24 heures. Le mélange réactionnel est concentré au tiers de son volume et versé dans 3 l de méthanol. Le polymère précipité est dissous dans le minimum de THF et reprécipité dans l'eau. Après séchage, on obtient 82 g de polymère dont les caractéristiques sont les suivantes :

$[\eta]^{THF}_{30°} = 69$ ml/g

Mw = 625000

La masse moléculaire est mesurée par diffusion de la lumière dans le polymère en solution dans du THF contenant 0,1 mole par litre de BrLi à 30°C.

## EXEMPLE 2

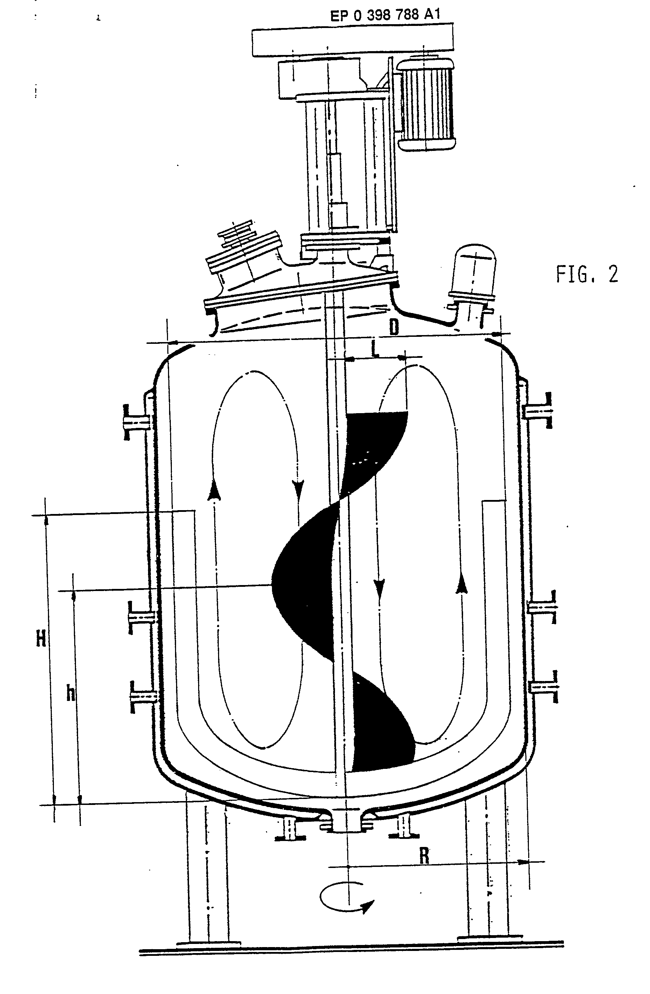

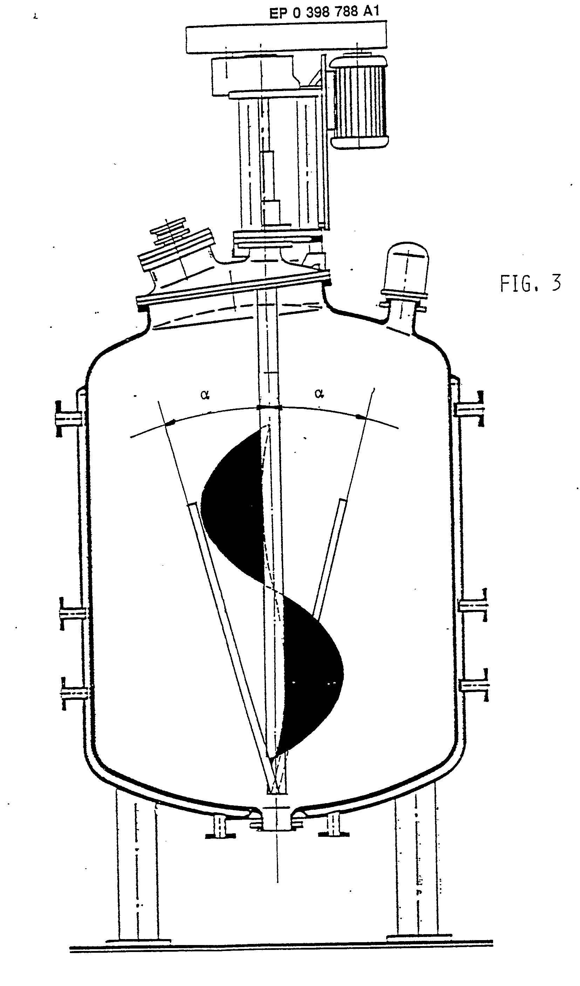

Un essai identique à celui de l'exemple 1 est effectué dans le même réacteur, mais dont le mobile d'agitation a été remplacé par celui correspondant aux figures 2 et 3, avec les caractéristiques suivantes (en mm) :

H = 180
h = 90
D = 290
L = 54
R = 150
$\alpha$ = 15°

Une quantité de $P_2NOCl_5$ identique à celle de l'exemple 1, est introduite dans ce réacteur et chauffée dans les mêmes conditions. Le dégagement d'oxychlorure de phosphore correspondant à 95 % de la quantité théorique, soit 8,5 Kg, cesse après 6,15 heures de réaction. Le polycondensat est maintenu dans les mêmes conditions et son évolution est suivie en fonction du temps :

| Temps (h) | $[\eta]$ THF 30° (ml/g) |
|---|---|
| 33,5 | 48,2 |
| 38,7 | 55,3 |

Le réacteur est refroidi à 100°. On introduit 10 l de toluène. Après 4 heures d'agitation, on obtient une solution de polydichlorophosphazène exempte de fraction insoluble.

La solution est traitée d'une façon identique à celle décrite à l'exemple 1. On obtient ainsi un polydiphénoxyphosphazène présentant les caractéristiques suivantes :

$[\eta]$ $\begin{smallmatrix}THF\\30°\end{smallmatrix}$ = 67,5 ml/g

Mw = 605000

## EXEMPLE 3 (comparatif)

On renouvelle l'essai de l'exemple 2 en utilisant un réacteur ne comportant que l'agitateur-ancre dont la hauteur des pales (correspondant à H dans l'exemple 2) est de 180 mm.

On introduit dans ce réacteur 20 Kg (74,2 moles) de dichlorophosphoryltrichlorophosphazène ($P_2NOCl_5$). Le réacteur est chauffé à 280°C sous atmosphère inerte et sous agitation. On observe un dégagement d'oxychlorure de phosphore correspondant à 95 % de la quantité théorique, soit 10,8 Kg, en 4,5 heures de réaction. La polycondensation est poursuivie et au bout de 5 heures, on effectue un prélèvement sur lequel on mesure la viscosité intrinsèque (à 30° dans le THF). Celle-ci est de 22 ml/g. Au bout de 6 heures, on observe une montée du polymère le long de l'axe d'agitation et 10 minutes plus tard, l'intégralité du polycondensat est solidaire de l'ancre.

Le réacteur est alors refroidi à 100°. On introduit 10 l de toluène. Après 24 heures d'agitation à cette température, une quantité négligeable de polydichlorophosphazène est passée en solution. L'essentiel du plycondensat se présente sous forme d'un gel insoluble gonflé par le solvant.

## Revendications

1. Procédé de préparation en masse de polychlorophosphazène à partir de $P_2NXCl_5$, où X désigne un atome d'oxygène ou de soufre, ce procédé étant caractérisé en ce qu'au moins la phase de polycondensation postérieure à la cessation du dégagement de $PXCl_3$ (phase finale) est effectuée dans un réacteur cylindrique sensiblement vertical comportant dans la zone de polycondensation un système d'agitation et des pièces fixes ou mobiles s'opposant à l'accumulation du polycondensat sur ledit système d'agitation.

2. Procédé selon la revendication 1, caractérisé en ce qu'au moins la phase finale la polycondensation est réalisée dans un réacteur cylindrique sensiblement vertical, comportant :

A/ au moins un agitateur comportant un ruban hélicoïdal, l'axe de rotation dudit ou desdits agitateur- (s) étant sensiblement parallèle(s) à la génératrice du cylindre constituant le réacteur, la géométrie dudit ruban hélicoïdal et son sens de rotation provoquant un mouvement essentiellement descendant du polycondensat en formation dans la partie du réacteur constituée par un ou plusieurs cylindres de révolution dont l'axe ou les axes est (sont) constitué(s) par l'axe ou les axes de rotation du ou des agitateur- (s) et

B/ une ou plusieurs pièces mobiles, solidaires ou non du ou des agitateurs mentionnés sous A et/ou une ou plusieurs pièces immobiles, solidaires du réacteur, destinées à conférer au polycondensat un mouvement essentiellement ascendant dans la partie restante du réacteur, le volume représenté par le cylindre ou l'ensemble des cylindres de révolution susmentionnés représentant sensiblement la moitié du volume du réacteur effectivement occupé par le polycondensat.

3. Procédé selon l'une quelconque des revendications 1 et 2, caractérisé en ce que ledit procédé est conduit dans un réacteur vertical cylindrique comportant un agitateur (AV) vertical dont l'axe de rotation se confond avec l'axe du réac teur cylindrique précité, ledit agitateur (AV) étant constitué d'un arbre et d'un ruban hélicoïdal enroulé sur cet arbre, le sens d'enroulement du ruban étant fixé par rapport au sens de rotation dudit agitateur (AV) aux fins de provoquer un déplacement de la matière essentiellement du haut vers le bas à proximité dudit agitateur, ledit réacteur comportant un second système d'agitation créant un mouvement essentiellement ascendant à proximité de la paroi du réacteur.

4. Procédé selon la revendication 3, caractérisé en ce que le second système d'agitation est constitué par un ruban hélicoïdal fixé sur le même arbre que l'agitateur (AV) à une certaine distance dudit arbre, et dont le sens d'enroulement est l'inverse de celui du ruban constituant ledit agitateur (AV).

5. Procédé selon l'une quelconque des revendications 1 à 3, caractérisé en ce que le second système d'agitation est un agitateur-ancre dont les pales sont inclinées de part et d'autre du plan de symétrie du réacteur.

6. Procédé selon la revendication 4, caractérisé en ce que la largeur des lames constituant les rubans hélicoïdaux représente 10 à 40 % du rayon interne du réacteur, le ruban intérieur étant fixé directement sur l'arbre d'agitation, le bord intérieur du ruban extérieur étant solidarisé de place en place avec l'arbre de l'agitateur à une distance comprise entre environ 40 % et environ 60 % du rayon interne du réacteur, le pas desdits rubans hélicoïdaux étant compris entre 10 et 100 % de la hauteur effective du réacteur.

7. Procédé selon la revendication 5, caractérisé en ce que la largeur du ruban hélicoïdal est comprise entre 10 et 60 % du rayon intérieur du réacteur et en ce que les pales de l'agitateur-ancre remontent le long de la paroi cylindrique du réacteur sur une hauteur d'environ 30 à environ 70 % de la hauteur effective du réacteur.

8. Polychlorophosphazène de haute masse moléculaire tel qu'obtenu par polycondensation en masse de $P_2NXCl_5$ au moins pour la phase postérieure à la cessation de l'émission de $PXCl_3$ selon le procédé selon l'une quelconque des revendications 1 à 7.

FIG. 1

FIG. 2

EP 0 398 788 A1

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,Y | EP-A-132188 (SOC. NAT. ELF AQUITAINE) <br> * le document en entier * <br> --- | 1-8 | C01B21/098 <br> C01B21/097 <br> B01J19/20 |
| Y | FR-A-2380067 (BAYER) <br> * page 3, lignes 24-31; revendications 1-4; figure 4 * <br> --- | 1-4, 6, 8 | |
| Y | FR-A-1257780 (COMP. DE SAINT-GOBAIN) <br> * revendications 1, 2; figure * <br> --- | 1, 2, 4, 6, 8 | |
| Y | US-A-4198376 (FOURNEL) <br> * abrégé; figure 1 * <br> --- | 1-3, 5, 7, 8 | |
| D,A | EP-A-178997 (SOC. NAT. ELF AQUITAINE) <br> --- | | |
| A | EP-A-51804 (HOECHST) <br> ----- | | |

**DOMAINES TECHNIQUES RECHERCHES (Int. Cl.5 )**

C01B
B01J
C08G

Le présent rapport a été établi pour toutes les revendications

| Lieu de la recherche | Date d'achèvement de la recherche | Examinateur |
|---|---|---|
| LA HAYE | 16 JUILLET 1990 | ZALM W.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)